# EUROPÄISCHE PATENTSCHRIFT

(11) **EP 4 241 923 B1**
(45) Veröffentlichungstag und Bekanntmachung des Hinweises auf die Patenterteilung: **10.09.2025**
(21) Anmeldenummer: 23154492.5
(22) Anmeldetag: 01.02.2023
(51) Int. Cl.: B25B 23/18, B25F 5/00, B25F 5/02

(54) **HANDWERKZEUGMASCHINE MIT EINER ARBEITSFELDBELEUCHTUNG**
HAND-HELD POWER TOOL WITH A WORKING AREA ILLUMINATION
MACHINE-OUTIL PORTATIVE DOTÉE D'UN ÉCLAIRAGE DE CHAMP DE TRAVAIL

(30) Priorität: 10.03.2022 DE 102022202409
(43) Veröffentlichungstag der Anmeldung: 13.09.2023
(73) Patentinhaber: Robert Bosch GmbH, 70442 Stuttgart (DE)
(72) Erfinder: Calvin, Khoo Ming Yang, 11200 Bayan Lepas, Penang (MY); Ong, Chee Hao, 11060 Air Itam, Penang (MY)

(56) Entgegenhaltungen:
- EP-A1- 3 000 563
- DE-A1- 102005 041 489
- DE-A1- 102008 003 484
- DE-A1- 102009 018 589
- US-A1- 2007 256 914

## Beschreibung

### Stand der Technik

Die vorliegende Erfindung betrifft eine Handwerkzeugmaschine, insbesondere einen Schrauber, mit einer Arbeitsfeldbeleuchtung und einem länglichen Gehäuse, in dem eine Antriebseinheit angeordnet ist, die zumindest einen Antriebsmotor zum Antrieb einer Werkzeugaufnahme aufweist, wobei die Werkzeugaufnahme zur Aufnahme eines Einsatzwerkzeugs ausgebildet ist, und mit einem Akku zur netzunabhängigen Stromversorgung, wobei das Akku in einem Aufladevorgang zu einem Aufladen mit einer externen Aufladevorrichtung elektrisch leitend verbindbar ist.

Aus dem Stand der Technik ist eine derartige, als Stabschrauber ausgebildete Handwerkzeugmaschine bekannt. Der Stabschrauber weist im Gehäuse einen Antriebsmotor zum Antrieb einer zugeordneten Werkzeugaufnahme auf. Des Weiteren weist der Stabschrauber eine Arbeitsfeldbeleuchtung zur Beleuchtung eines zu bearbeitenden Arbeitsfelds auf. Darüber hinaus weist der Stabschrauber ein Akku zur netzunabhängigen Stromversorgung auf. An dem Gehäuse des Stabschraubers sind LEDs angeordnet, die bei einem Aufladevorgang des Akkus einen jeweiligen Batterieladezustand visualisieren. Weiterer Stand der Technik kann der EP 3 000 563 A entnommen werrden, die auch die Präambel des Hauptanspruches offenbart.

### Offenbarung der Erfindung

Die Erfindung betrifft eine Handwerkzeugmaschine, insbesondere einen Schrauber, mit einer Arbeitsfeldbeleuchtung und einem länglichen Gehäuse, in dem eine Antriebseinheit angeordnet ist, die zumindest einen Antriebsmotor zum Antrieb einer Werkzeugaufnahme aufweist, wobei die Werkzeugaufnahme zur Aufnahme eines Einsatzwerkzeugs ausgebildet ist, und mit einem Akku zur netzunabhängigen Stromversorgung, wobei das Akku in einem Aufladevorgang zu einem Aufladen mit einer externen Aufladevorrichtung elektrisch leitend verbindbar ist. Der Arbeitsfeldbeleuchtung ist eine Steuerelektronik zugeordnet, die dazu ausgebildet ist, im Aufladevorgang ein Aufladen des Akkus durch ein sich wiederholendes Aufleuchten und Dimmen der Arbeitsfeldbeleuchtung zu visualisieren.

Die Erfindung ermöglicht somit die Bereitstellung einer Handwerkzeugmaschine, bei der durch die Steuerelektronik eine einfache und unkomplizierte Steuerung der Arbeitsfeldbeleuchtung zur Visualisierung eines Aufladevorgangs des Akkus ermöglicht werden kann.

Bevorzugt weist die Steuerelektronik eine Detektionseinheit zur Detektion einer mit dem Akku elektrisch leitend verbundenen, externen Aufladevorrichtung auf und ist dazu ausgebildet, in Antwort auf eine Detektion der externen Aufladevorrichtung einen Aufladevorgang des Akkus zu initiieren.

Somit kann auf einfache Art und Weise nach der Detektion einer elektrischen Verbindung der Handwerkzeugmaschine mit der externen Aufladevorrichtung ein Aufladevorgang auf automatisierte Art und Weise gestartet werden.

Vorzugsweise weist die Steuerelektronik eine Aufladekontrolleinheit auf, die dazu ausgebildet ist, den Aufladevorgang zu initiieren und nach erfolgter Aufladung zu beenden.

Somit kann sicher und zuverlässig ein Aufladevorgang beendet werden.

Gemäß einer Ausführungsform ist der Steuerelektronik eine Batterieladezustandserfassungseinheit zugeordnet, die dazu ausgebildet ist, einen jeweils aktuellen Batterieladezustand zu erfassen.

Somit kann leicht und unkompliziert ein Aufladevorgang gesteuert und beendet werden. Alternativ kann der ermittelte Batterieladezustand einem Benutzer visuell veranschaulicht werden.

Der Steuerelektronik ist vorzugsweise eine Helligkeitssteuerung zum Steuern einer jeweiligen Helligkeit der Arbeitsfeldbeleuchtung zugeordnet, wobei die Helligkeitssteuerung zumindest einen Transistor und/oder ein MOSFET aufweist.

Somit kann auf einfache Art und Weise eine gewünschte Helligkeit der Arbeitsfeldbeleuchtung bei einem Aufladevorgang eingestellt werden.

Bevorzugt ist die Steuerelektronik dazu ausgebildet, nach einem vollständigen Aufladen des Akkus die Arbeitsfeldbeleuchtung zu deaktivieren.

Somit kann leicht und unkompliziert ein vollständiges Aufladen des Akkus visualisiert werden.

Gemäß einer Ausführungsform ist der Steuerelektronik ein Schalterelement zugeordnet, wobei bei einer Aktivierung des Schalterelements ein Batterieladezustand im Betrieb der Handwerkzeugmaschine visualisierbar ist.

Somit kann auf einfache Art und Weise ein Batterieladezustand im Betrieb der Handwerkzeugmaschine visualisiert werden.

Das Schalterelement ist vorzugsweise nach Art eines von einem Benutzer der Handwerkzeugmaschine aktivierbaren Schalters ausgebildet.

Somit kann eine leichte und unkomplizierte Aktivierung einer Visualisierung des Batterieladezustands im Betrieb der Handwerkzeugmaschine durch einen Benutzer der Handwerkzeugmaschine ermöglicht werden.

Gemäß einer Ausführungsform ist eine Aktivierungseinheit zum Aktivieren des Antriebsmotors vorgesehen, wobei durch ein Beaufschlagen eines in der Werkzeugaufnahme angeordneten Einsatzwerkzeugs gegen ein zu bearbeitendes Werkstück, insbesondere entlang einer Längsachse der Handwerkzeugmaschine, eine Aktivierung des Antriebsmotors erfolgt.

Somit kann auf einfache Art und Weise eine Aktivierung des Antriebsmotors ermöglicht werden.

Darüber hinaus betrifft die vorliegende Erfindung ein Verfahren zum Aufladen eines Akkus einer Handwerkzeugmaschine, insbesondere eines Schraubers, die eine Arbeitsfeldbeleuchtung und ein längliches Gehäuse aufweist, in dem eine Antriebseinheit angeordnet ist, die zumindest einen Antriebsmotor zum Antrieb einer Werkzeugaufnahme aufweist, sowie ein Akku zur netzunabhängigen Stromversorgung, wobei das Akku in einem Aufladevorgang zu einem Aufladen mit einer externen Aufladevorrichtung elektrisch leitend verbindbar ist, wobei das Verfahren folgende Schritte aufweist:
- Elektrisch leitendes Verbinden der Aufladevorrichtung mit dem Akku,
- Detektieren der elektrisch leitenden Verbindung des Akkus mit der Aufladevorrichtung durch eine Detektionseinheit,
- Aktivieren eines Aufladevorgangs durch eine Aufladekontrolleinheit, und
- Aktivieren der Arbeitsfeldbeleuchtung, wobei ein sich wiederholendes Aufleuchten und Dimmen der Arbeitsfeldbeleuchtung während des Aufladevorgangs erfolgt.

Die Erfindung ermöglicht somit die Bereitstellung eines Verfahrens zum Aufladen eines Akkus einer Handwerkzeugmaschine, bei dem eine einfache und unkomplizierte Steuerung der Arbeitsfeldbeleuchtung zur Visualisierung eines Aufladevorgangs des Akkus ermöglicht werden kann.

Bevorzugt erfolgt vor einer Aktivierung der Aufladekontrolleinheit eine Detektion eines Batterieladezustands durch eine Batterieladezustandserfassungseinheit.

Somit kann auf einfache Art und Weise in Abhängigkeit von einem detektierten Batterieladezustand ein Aufladen des Akkus ermöglicht werden.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine Seitenansicht einer erfindungsgemäßen Handwerkzeugmaschine mit einer Arbeitsfeldbeleuchtung und einer Aufladevorrichtung,
- Fig. 2: einen Längsschnitt durch eine der Handwerkzeugmaschine von Fig. 1 zugeordnete Antriebseinheit im aktivierten Zustand,
- Fig. 3: eine vergrößerte Ansicht des Längsschnitts durch die Antriebseinheit von Fig. 2 im deaktivierten Zustand,
- Fig. 4: eine schematische Ansicht einer Anordnung einer der Handwerkzeugmaschine von Fig. 1 bis Fig. 3 zugeordneten Steuerelektronik zur Steuerung der Arbeitsfeldbeleuchtung, sowie die Arbeitsfeldbeleuchtung,
- Fig. 5: eine schematische Ansicht eines Blockdiagramms der Steuerelektronik von Fig. 4,
- Fig. 6: einen Teilbereich eines beispielhaften Flussdiagramms eines Aufladevorgangs der Handwerkzeugmaschine von Fig. 1 bis Fig. 3 mit der Steuerelektronik von Fig. 4 und Fig. 5,
- Fig. 7: einen weiteren Teilbereich des beispielhaften Flussdiagramms von Fig. 6, und
- Fig. 8: einen weiteren Teilbereich des beispielhaften Flussdiagramms von Fig. 6 und Fig. 7.

### Beschreibung der Ausführungsbeispiele

In den Figuren werden Elemente mit gleicher oder vergleichbarer Funktion mit identischen Bezugszeichen versehen und nur einmal genauer beschrieben.

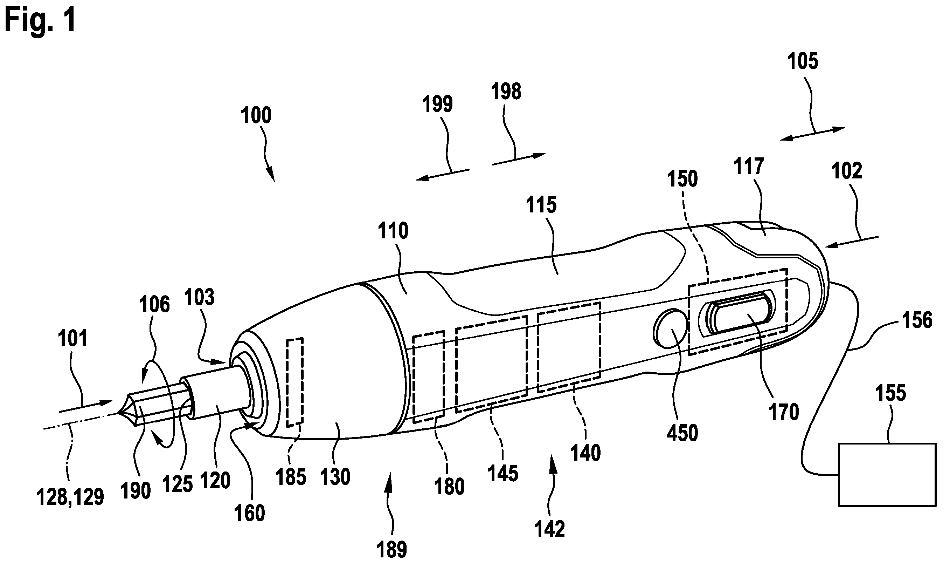

Fig. 1 zeigt eine beispielhafte Handwerkzeugmaschine 100, die illustrativ ein längliches Gehäuse 110 aufweist. Unter dem Begriff "längliches Gehäuse" wird in der vorliegenden Beschreibung ein Gehäuse verstanden, dessen Längserstreckung um ein Vielfaches größer ist als dessen Quererstreckung. Durch das längliche Gehäuse 110 ist die Handwerkzeugmaschine 100 somit beispielhaft in der sogenannten "Stab-Form" ausgebildet.

Bevorzugt ist die Handwerkzeugmaschine 100 als Schrauber, insbesondere als Stabschrauber, ausgebildet. Gemäß einer Ausführungsform ist die Handwerkzeugmaschine 100 zur netzunabhängigen Stromversorgung mechanisch und elektrisch mit einer Energieversorgungseinheit 150 verbunden. Bevorzugt ist die Energieversorgungseinheit 150 als Akku ausgebildet. Es wird darauf hingewiesen, dass das Akku 150 vorzugsweise derart in dem länglichen Gehäuse 110 befestigt ist, dass das Akku 150 vorzugsweise bei einem Aufladevorgang des Ackus 150 im länglichen Gehäuse 110 verbleibt.

Des Weiteren ist in dem länglichen Gehäuse 110 eine Antriebseinheit 142 zum Antrieb der Werkzeugaufnahme 120 angeordnet. Bevorzugt weist die Antriebseinheit 142 zumindest einen Antriebsmotor 140 zum Antrieb der Werkzeugaufnahme 120 auf. Der Werkzeugaufnahme 120 ist vorzugsweise eine Innenaufnahme 125 zur Aufnahme eines Einsatzwerkzeugs 190, z.B. eines Schrauberbits oder eines Bohrers, zugeordnet. Gemäß einer Ausführungsform ist der Antriebseinheit 142 darüber hinaus ein Getriebe 145 zugeordnet. Bevorzugt ist das Getriebe 145 als Planetengetriebe ausgebildet. Jedoch kann die Handwerkzeugmaschine 100 auch ohne Getriebe 145 ausgebildet sein.

Das längliche Gehäuse 110 weist vorzugsweise einen zylindrischen Grundkörper mit einem ersten axialen Ende 101 und einem gegenüberliegenden zweiten axialen Ende 102 auf, wobei im Bereich des ersten axialen Endes 101 beispielhaft die Werkzeugaufnahme 120 angeordnet ist. Illustrativ wird zwischen dem ersten und zweiten axialen Ende 101, 102 eine Längsrichtung 105 des länglichen Gehäuse 110 ausgebildet. Der Werkzeugaufnahme 120 ist vorzugsweise eine Rotationsachse 129 zugeordnet. Des Weiteren weist das längliche Gehäuse 110 illustrativ eine Umfangsrichtung 106 auf.

Bei der in Fig. 1 gezeigten Handwerkzeugmaschine 100 sind die Werkzeugaufnahme 120, der Antriebsmotor 140, sowie das längliche Gehäuse 110 mit einem Griffbereich 115 und einem Deckel 117 koaxial zu einer gemeinsamen Anordnungsachse angeordnet, die bevorzugt der Rotationsachse 129 der Werkzeugaufnahme 120 bzw. der Längsachse des länglichen Gehäuses 110 entspricht. So ist im Vergleich zu einer Handwerkzeugmaschine mit einem pistolenförmigen Gehäuse, bei der der Akku senkrecht zur Rotationsachse der Werkzeugaufnahme 120 angeordnet ist, was aus dem Stand der Technik hinreichend bekannt ist, auch der Akku 150 in der Handwerkzeugmaschine 100 bevorzugt, wie oben beschrieben, entlang der Rotationsachse 129 der Werkzeugaufnahme 120 angeordnet. Bevorzugt sind alle Elemente der Handwerkzeugmaschine 100 in dem länglichen Gehäuse 110 angeordnet.

Des Weiteren ist vorzugsweise ein Schiebeschalter 170 vorgesehen, der zum Aktivieren eines Reversierbetriebs des Antriebsmotors 140 am länglichen Gehäuse 110 angeordnet ist. Ebenso weist das längliche Gehäuse 110 bevorzugt an seinem axialen Ende 101 eine Drehmomenteinstellhülse 130 auf. Darüber hinaus ist an dem von der Werkzeugaufnahme 120 abgewandten axialen Ende 102 des länglichen Gehäuses 110 vorzugsweise der Deckel 117 angeordnet.

Gemäß einer Ausführungsform ist eine Aktivierungseinheit 189 zum Aktivieren des Antriebsmotors 140 durch ein Beaufschlagen der Werkzeugaufnahme 120, bzw. des in der Werkzeugaufnahme 120 angeordneten bzw. aufgenommenen Einsatzwerkzeugs 190, gegen ein zu bearbeitendes Werkstück vorgesehen. Eine entsprechende axiale Beaufschlagung der Werkzeugaufnahme 120 bzw. des Einsatzwerkzeugs 190, d.h. ein Beaufschlagen in axialer Richtung, erfolgt bevorzugt in der Längsrichtung 105 gegen das zu bearbeitende Werkstück. Hierbei aktiviert bevorzugt ein, insbesondere axiales, Beaufschlagen der Werkzeugaufnahme 120 von mindestens 0,1 Nm den Antriebsmotor 140. Allgemein ist in der vorliegenden Beschreibung unter dem Begriff "axial" oder "in axialer Richtung" eine Richtung in Längsrichtung 105 des länglichen Gehäuses 110, insbesondere eine Richtung koaxial oder parallel zur Rotationsachse 129 der Werkzeugaufnahme 120, zu verstehen.

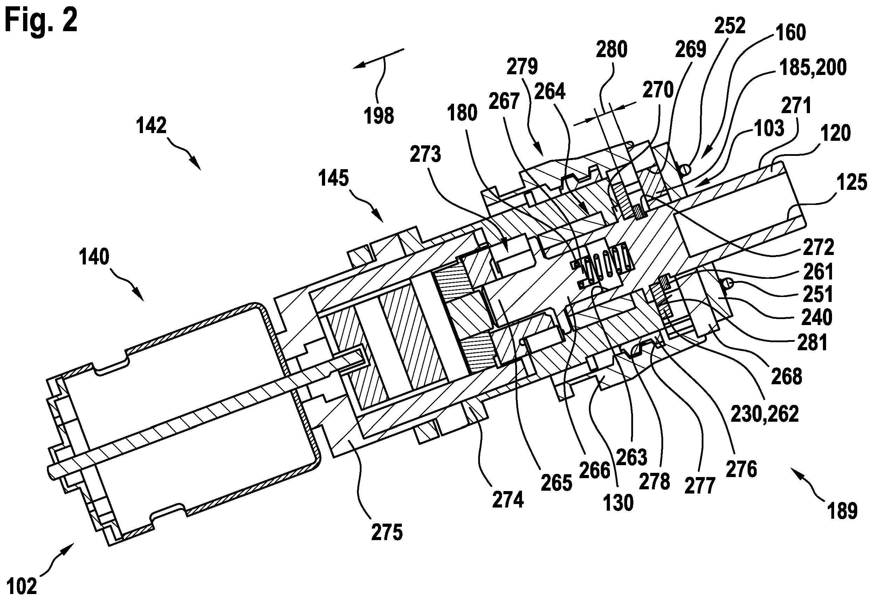

Die Aktivierungseinheit 189 ist bevorzugt entlang einer Längsachse 128 zwischen dem Antriebsmotor 140 und dem ersten axialen Ende 101 des länglichen Gehäuses 110 bzw. einer Stirnseite 103 des länglichen Gehäuses 110 angeordnet. Die Längsachse 128 entspricht illustrativ der Rotationsachse 129. Hierbei erfolgt bevorzugt durch ein Verschieben der Werkzeugaufnahme 120 entlang der Längsachse 128 der Handwerkzeugmaschine 100 die Aktivierung des Antriebsmotors 140. Hierfür weist die Aktivierungseinheit 189 einen im Bereich der Werkzeugaufnahme 120 angeordneten Motorschalter 185 auf. Vorzugsweise ist der bevorzugt als Motorausschalter (200 in Fig. 2) ausgebildete Motorschalter 185 an bzw. im Bereich der Stirnseite 103 des länglichen Gehäuses 110 angeordnet. Des Weiteren ist der Werkzeugaufnahme 120 bevorzugt ein Betätigungselement (230 in Fig. 2) zum Betätigen des Motorschalters 185 zugeordnet.

Der Motorschalter 185 bzw. der Motorausschalter (200 in Fig. 2) ist vorzugsweise der Aktivierungseinheit 189 zugeordnet. Bevorzugt wird das Betätigungselement (230 in Fig. 2) durch ein Federelement 180 in eine vom Antriebsmotor 140 wegweisende Richtung 199 gegen den Motorausschalter 200 beaufschlagt, wodurch der Antriebsmotor 140 deaktiviert wird.

Bevorzugt ist das Federelement 180 durch ein Beaufschlagen der Werkzeugaufnahme 120 in Richtung des Antriebsmotors 140, d.h. in eine zum Antriebsmotor 140 hinweisende Richtung 198, komprimierbar. Dabei erfolgt eine Freigabe des Motorausschalters (200 in Fig. 2) durch das Betätigungselement (230 in Fig. 2) und somit eine Aktivierung des Antriebsmotors 140. Bei einem Beaufschlagen der Werkzeugaufnahme 120, bzw. des in der Werkzeugaufnahme 120 angeordneten Einsatzwerkzeugs 190 gegen das zu bearbeitende Werkstück, wird das Betätigungselement (230 in Fig. 2) vorzugsweise vom Motorausschalter (200 in Fig. 2) beabstandet und der Antriebsmotor 140 wird aktiviert.

Es wird darauf hingewiesen, dass der Motorschalter 185 auch als Motoreinschalter ausgebildet sein kann. Darüber hinaus wird darauf hingewiesen, dass der Motorschalter 185 auch an einer beliebig anderen Stelle der Handwerkzeugmaschine 100 bzw. im länglichen Gehäuse 110 angeordnet sein kann. Des Weiteren kann die Aktivierungseinheit 189 gemäß einer alternativen Ausführungsform auch lediglich ein Bedienelement zum manuellen Aktivieren der Antriebseinheit 142 durch einen Benutzer der Handwerkzeugmaschine 100 aufweisen.

Darüber hinaus ist an der Stirnseite 103 des länglichen Gehäuses 110 eine Arbeitsfeldbeleuchtung 160 zur Beleuchtung eines Arbeitsfelds bzw. eines zu bearbeitenden Werkstücks angeordnet. Die Arbeitsfeldbeleuchtung 160 beleuchtet bei einem Arbeitsvorgang das zu bearbeitende Werkstück, wobei vorzugsweise eine Aktivierung der Arbeitsfeldbeleuchtung 160 durch eine Aktivierung der Antriebseinheit 142, bzw. in Antwort auf eine derartige Aktivierung, erfolgt. Hierbei erfolgt ein dauerhaftes Leuchten der Arbeitsfeldbeleuchtung 160. Bevorzugt erfolgt eine Deaktivierung der Arbeitsfeldbeleuchtung 160 durch eine Deaktivierung der Antriebseinheit 142, bzw. in Antwort auf eine derartige Deaktivierung.

Des Weiteren ist in Fig. 1 eine externe Aufladevorrichtung 155 zum Aufladen des Akkus 150 gezeigt. Zum Aufladen des Akkus 150 ist die externe Aufladevorrichtung 155 illustrativ über ein Ladekabel 156 mit der Handwerkzeugmaschine 100 elektrisch leitend verbunden.

Es wird darauf hingewiesen, dass die externe Aufladevorrichtung 155 lediglich für einen Aufladevorgang elektrisch leitend mit dem Akku 150 der Handwerkzeugmaschine 100 verbunden ist. Im Betrieb der Handwerkzeugmaschine 100 ist die externe Aufladevorrichtung 155 bevorzugt nicht elektrisch leitend mit dem Akku 150 der Handwerkzeugmaschine 100 verbunden.

Darüber hinaus wird darauf hingewiesen, dass das Akku 150 auch als wechselbarer bzw. austauschbarer Akkupack ausgebildet sein kann, der lösbar an der Handwerkzeugmaschine 100 angeordnet werden kann. In diesem Fall ist jedoch bei einem Aufladevorgang das als wechselbarer Akkupack ausgebildete Akku 150 an der Handwerkzeugmaschine 100 angeordnet. Des Weiteren kann die elektrisch leitende Verbindung der externen Aufladevorrichtung 155 auch über eine drahtlose Verbindung, z.B. eine induktive Kopplung, ausgebildet werden.

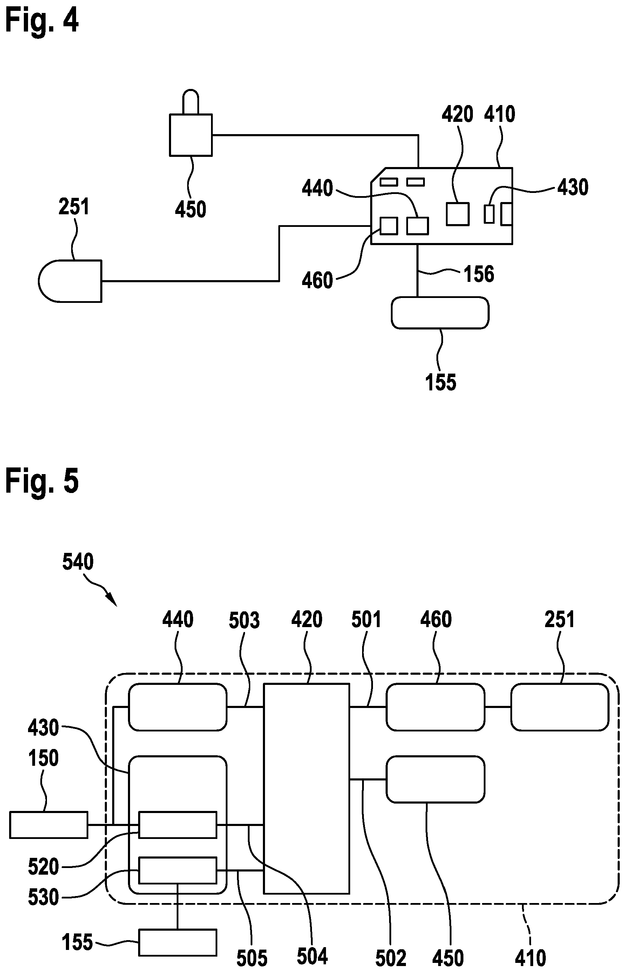

Erfindungsgemäß weist die Handwerkzeugmaschine 100 eine der Arbeitsfeldbeleuchtung 160 zugeordnete Steuerelektronik (410 in Fig. 4) auf, die dazu ausgebildet ist, bei einem Aufladevorgang ein Aufladen des Akkus 150 durch ein sich wiederholendes Aufleuchten und Dimmen der Arbeitsfeldbeleuchtung 160 zu visualisieren. Bevorzugt ist die Steuerelektronik (410 in Fig. 4) im Bereich einer dem zweiten axialen Ende 102 des länglichen Gehäuses 110 zugewandten Seite des Antriebsmotors 140 angeordnet. Gemäß einer Ausführungsform ist der Steuerelektronik (410 in Fig. 4) ein optionales Schalterelement 450 zugeordnet, wobei bei einer Aktivierung des Schalterelements 450 ein Aufladevorgang aktivierbar ist.

Fig. 2 zeigt eine beispielhafte Antriebseinheit 142 der Handwerkzeugmaschine 100 von Fig. 1. Dabei verdeutlicht Fig. 2 das optionale, illustrativ in einem Getriebegehäuse 274, 275 angeordnete Getriebe 145. Bevorzugt weist das Getriebegehäuse 274, 275 ein der Werkzeugaufnahme 120 zugewandt angeordnetes Gehäuseteil 274 und ein dem Antriebsmotor 140 zugewandtes Gehäuseteil 275 auf. Bevorzugt dient eine der Werkzeugaufnahme 120 zugewandte Stirnfläche 281 des Getriebegehäuses 274, 275, insbesondere des Gehäuseteils 274, als axiale Anlagefläche des Betätigungselements 230 bei deaktiviertem Antriebsmotor 140.

Des Weiteren ist bevorzugt eine Drehmomentkupplung vorgesehen, die eine Drehmomenteinstellvorrichtung 279 aufweist. Die Drehmomenteinstellvorrichtung 279 weist die Drehmomenteinstellhülse 130 zum Einstellen eines vorgebbaren Drehmoments und einen Federhaltering 276 auf. Die Drehmomenteinstellhülse 130 ist dabei bevorzugt direkt mit dem Federhaltering 276 über eine Verzahnung 277, 278 verbunden. Hierbei weist die Drehmomenteinstellhülse 130 an ihrem Innenumfang vorzugsweise ein Innengewinde 278 auf und der Federhaltering 276 weist an seinem Außenumfang ein Außengewinde 277 zur Ausbildung der Verzahnung 277, 278 auf.

In Fig. 2 ist der Antriebsmotor 140 beispielhaft aktiviert. Dabei ist zwischen dem Betätigungselement 230, bzw. einem Betätigungsabschnitt 262, und dem Motorschalter 185, bzw. einem Motorausschalter 200, bevorzugt ein Abstand 280 ausgebildet. Der Abstand 280 entsteht durch die Beaufschlagung der Werkzeugaufnahme 120, wodurch das Federelement 180 komprimiert wird. Die Werkzeugaufnahme 120 steht dabei vorzugsweise mit einem Abstützelement 270 an der Stirnfläche 281 des Gehäuseteils 274 an.

Zum Aktivieren des Antriebsmotors 140 wird die Werkzeugaufnahme 120, bzw. das in der Werkzeugaufnahme 120 angeordnete Einsatzwerkzeug 190, gegen ein zu bearbeitendes Werkstück beaufschlagt, wodurch sich die Werkzeugaufnahme 120 in die Richtung 198 zum Antriebsmotor 140 hin verschiebt. Hierbei wird zwischen dem Betätigungselement 230, bzw. dem Betätigungsabschnitt 262, und dem Motorausschalter 200 der Abstand 280 ausgebildet und der Antriebsmotor 140 wird aktiviert.

Des Weiteren verdeutlicht Fig. 2 eine Anordnung eines Lagerelements 264 zwischen dem Gehäuseteil 274 und einem Außenumfang 271 der Werkzeugaufnahme 120. Ebenfalls ist die Anordnung des Betätigungselements 230 auf dem Außenumfang 271 der Werkzeugaufnahme 120, sowie die axiale Fixierung des Betätigungselements 230 durch ein in einer Positionierungsnut 272 angeordnetes Sicherungselement 261 gezeigt.

Die Werkzeugaufnahme 120 weist an ihrer dem Antriebsmotor 140 zugewandten Seite bevorzugt eine Innenaufnahme 263 zur Aufnahme des Federelements 180 auf. Darüber hinaus weist das Getriebe 145 vorzugsweise ein Abtriebselement 265 auf, wobei das Abtriebselement 265 in die Innenaufnahme 263 der Werkzeugaufnahme 120 eingreift. Des Weiteren ist die Werkzeugaufnahme 120 bevorzugt axial verschiebbar gegenüber dem Abtriebselement 265 ausgebildet. Es wird darauf hingewiesen, dass vorzugsweise die Antriebseinheit 142 im länglichen Gehäuse 110 axial fixiert angeordnet ist und lediglich die Werkzeugaufnahme 120 axial verschiebbar ist. Dadurch kann eine mechanische Kupplung Anwendung finden.

Bevorzugt weist das Abtriebselement 265 eine Innenaufnahme 266 zur abschnittsweisen Aufnahme des Federelements 180 auf. Das Federelement 180 ist dabei zwischen dem Abtriebselement 265, insbesondere der Innenaufnahme 266, und der Werkzeugaufnahme 120, insbesondere der Innenaufnahme 263, angeordnet. Vorzugsweise weist die Innenaufnahme 266 des Abtriebselements 265 einen zentralen Positionierungszapfen 267 auf, der dazu ausgebildet ist, das Federelement 180 in der Innenaufnahme 263 zu zentrieren. Bevorzugt ist ein einzelnes Federelement 180 vorgesehen. Allerdings können auch mehrere in Reihe angeordnete Federelemente 180 in der Innenaufnahme 263 der Werkzeugaufnahme 120 angeordnet sein. Bevorzugt ist dem Abtriebselement 265 ein Spindellock 273 zugeordnet. Ein derartiger Spindellock 273 ist aus dem Stand der Technik hinreichend bekannt, weshalb hier auf eine ausführliche Beschreibung verzichtet wird.

Illustrativ ist die Aktivierungseinheit 189 zwischen dem Einsatzwerkzeug 190 und der Werkzeugaufnahme 120 angeordnet. Die Aktivierungseinheit 189 weist eine Leiterplatte 240 auf, auf der der Motorausschalter 200 angeordnet ist. Des Weiteren ist der Aktivierungseinheit 189 das Betätigungselement 230 zum Betätigen des Motorschalters 185 bzw. des Motorausschalters 200 zugeordnet. Das Betätigungselement 230 ist vorzugsweise auf dem Außenumfang 271 der Werkzeugaufnahme 120 angeordnet. Die Leiterplatte 240 ist bevorzugt am länglichen Gehäuse 110 befestigt und vorzugsweise im Bereich der Stirnseite 103 des länglichen Gehäuses 110 angeordnet. Insbesondere ist die Leiterplatte 240 bevorzugt mit einer Steuervorrichtung zum Steuern des Antriebsmotors 140 verbunden, wobei die Steuervorrichtung nicht dargestellt ist. Die Steuervorrichtung ist vorzugsweise von der Leiterplatte 240 beabstandet angeordnet. Insbesondere ist die Steuervorrichtung bevorzugt im Bereich einer dem zweiten axialen Ende 102 des länglichen Gehäuses 110 zugewandten Seite des Antriebsmotors 140 angeordnet.

Bevorzugt ist die Leiterplatte 240 über ein Halteelement 268 im länglichen Gehäuse 110, insbesondere in der Drehmomenteinstellhülse 130, angeordnet. Hierbei weist das Halteelement 268 vorzugsweise einen scheibenförmigen Grundkörper mit einer Ausnehmung 269 auf. Die Ausnehmung 269 ist derart ausgebildet, dass der Motorausschalter 200 darin angeordnet werden kann.

Bevorzugt sind der Leiterplatte 240 zwei LEDs 251, 252 zugeordnet. Bevorzugt sind die LEDs 251, 252 zur Ausbildung der Arbeitsfeldbeleuchtung 160 vorgesehen. Hierzu sind die LEDs 251, 252 beispielhaft an einer der Stirnseite 103 des länglichen Gehäuses 110 zugewandten Seite der Leiterplatte 240 angeordnet. Gemäß einer Ausführungsform sind die Steuervorrichtung und die Steuerelektronik (410 in Fig. 4) zum Steuern der Arbeitsfeldbeleuchtung 160 einstückig ausgebildet. Jedoch können die Steuervorrichtung und die Steuerelektronik (410 in Fig. 4) auch als separate Teile ausgebildet sein.

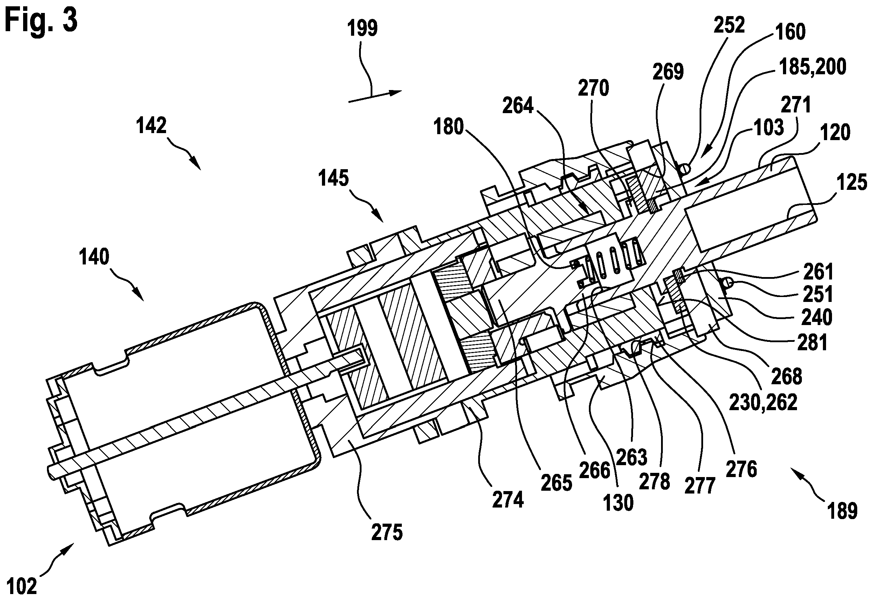

Fig. 3 zeigt die Antriebseinheit 142 von Fig. 1 und Fig. 2 mit der Aktivierungseinheit 189. In Fig. 3 ist der Antriebsmotor 140 beispielhaft deaktiviert. Dabei ist das Betätigungselement 230 bzw. der Betätigungsabschnitt 262 bevorzugt am Motorausschalter 200 angeordnet, da die Werkzeugaufnahme 120 nicht beaufschlagt ist, bzw. das Federelement 180 nicht komprimiert ist. Die Werkzeugaufnahme 120 bzw. das Abstützelement 270 ist dabei von der Stirnfläche 281 des Gehäuseteils 274 beabstandet.

Zum Deaktivieren des Antriebsmotors 140 wird die Werkzeugaufnahme 120, bzw. das in der Werkzeugaufnahme 120 angeordnete Einsatzwerkzeug 190 von Fig. 1, von einem zu bearbeitenden Werkstück beabstandet, wobei sich die Werkzeugaufnahme 120 in der vom Antriebsmotor 140 wegweisenden Richtung 199 in ihre Ruheposition verschiebt. Hierbei wird das Betätigungselement 230 bzw. der Betätigungsabschnitt 262 bevorzugt zum Motorausschalter 200 hinbewegt, wodurch der Abstand 280 von Fig. 2 null wird und der Antriebsmotor 140 deaktiviert wird. Es wird darauf hingewiesen, dass der Motorausschalter 200 bevorzugt beim Anliegen des Betätigungsabschnitts 262 von diesem betätigt wird.

Fig. 4 zeigt eine der Handwerkzeugmaschine 100 von Fig. 1 zugeordnete Steuerelektronik 410 zum Steuern der Arbeitsfeldbeleuchtung 160 der Handwerkzeugmaschine 100 von Fig. 1 bei einem Aufladevorgang. Bevorzugt ist die Steuerelektronik 410 auf einer Leiterplatte ausgebildet. Wie oben beschrieben, ist die Steuerelektronik 410 dazu ausgebildet ist, bei einem Aufladevorgang ein Aufladen des Akkus 150 von Fig. 1 durch ein sich wiederholendes Aufleuchten und Dimmen der Arbeitsfeldbeleuchtung 160 zu visualisieren. Hierzu ist der Steuerelektronik 410 zumindest ein Kontroller 420, insbesondere ein Mikrocontroller 420, zugeordnet.

Ist die Aufladevorrichtung 155 über das Ladekabel 156 mit der Handwerkzeugmaschine 100 verbunden, wird dies von der Steuerelektronik 410 erkannt und die LEDs 251, 252 von Fig. 2 und Fig. 3 der Arbeitsfeldbeleuchtung 160 von Fig. 1 bis Fig. 3 werden über einen Ladekreis 430 durch den Mikrocontroller 420 derart angesteuert, dass diese jeweils abwechselnd aufleuchten und wieder dimmen. Eine entsprechende Funktion des sich wiederholenden Aufleuchtens und Dimmens wird auch als "breathing" (d.h. Atmen) bezeichnet. Es wird darauf hingewiesen, dass in Fig. 4 lediglich die LED 251 exemplarisch für die LEDs 251, 252 gezeigt ist.

Gemäß einer Ausführungsform ist die Steuerelektronik 410 dazu ausgebildet, nach einem vollständigen Aufladen des Akkus 150 die Arbeitsfeldbeleuchtung 160 zu deaktivieren. Um ein vollständig aufgeladenes Akku 150 zu erkennen, ist der Steuerelektronik 410 eine Batterieladezustandserfassungseinheit 440 zugeordnet. Die Batterieladezustandserfassungseinheit 440 ist dazu ausgebildet, einen jeweils aktuellen Batterieladezustand zu erfassen. Hierbei kann die Batterieladezustandserfassungseinheit 440 unterschiedliche Batteriezustände dem Akku 150 zuordnen, z.B. "Akku leer" oder "Akku vollgeladen". Bevorzugt können die unterschiedlichen Batterieladezustände einem Benutzer in unterschiedlicher Art und Weise durch die Arbeitsfeldbeleuchtung 160 visualisiert werden, z.B. durch unterschiedlich schnelles Aufleuchten und Dimmen und/oder in unterschiedlichen Farben.

Wird ein niedriger Batterieladezustand detektiert, so sendet der Mikrocontroller 420 ein Aktivierungssignal an den Ladekreis 430 zum Laden des Akkus 150. Wird ein vollgeladenes Akku 150 detektiert, so sendet der Mikrocontroller 420 ein Deaktivierungssignal an den Ladekreis 430 zum Stoppen des Ladevorgangs des Akkus 150. Vorzugsweise wird dabei auch die Arbeitsfeldbeleuchtung 160 deaktiviert.

Wie in Fig. 1 beschrieben ist der Steuerelektronik 410 ein optionales Schalterelement 450 zugeordnet, wobei bei einer Aktivierung des Schalterelements 450 ein Aufladevorgang aktivierbar ist. Vorzugsweise ist das Schalterelement 450 nach Art eines von einem Benutzer der Handwerkzeugmaschine 100 aktivierbaren Schalters ausgebildet. Hierbei kann das Schalterelement 450 z.B. ein taktiler Schalter; Detektorschalter und/oder ein Mikroschalter sein.

Ist die Aufladevorrichtung 155 über das Ladekabel 156 mit der Handwerkzeugmaschine 100 verbunden und das Schalterelement 450 aktiviert, so leuchtet die Arbeitsfeldbeleuchtung 160 wiederholend auf und dimmt sich wieder bei niedrigem Batterieladezustand. Ist das Akku 150 vollständig geladen, wird die Arbeitsfeldbeleuchtung 160 deaktiviert.

Bei aktiviertem Schalterelement 450, jedoch nicht verbundener Aufladevorrichtung 155 und leerem Akku 150, blinken die LEDs 251, 252 der Arbeitsfeldbeleuchtung 160 auf, leuchten eine vorgegebene Zeitdauer und gehen anschließend aus. Hierbei kann auch eine beliebig andere Blink- und Leuchtreihenfolge erfolgen. Ist bei aktiviertem Schalterelement 450 und nicht verbundener Aufladevorrichtung 155 das Akku 150 vollaufgeladen, leuchten die LEDs 251, 252 der Arbeitsfeldbeleuchtung 160 eine vorgegebene Zeitdauer auf und gehen anschließend aus. Bevorzugt sind die vorgegebenen Zeitdauern unterschiedlich lang. Gemäß einer weiteren Ausführungsform können die vorgegebenen Zeitdauern auch gleich sein.

Gemäß einer weiteren Ausführungsform ist das Schalterelement 450 der Steuerelektronik 410 dazu ausgebildet, bei einer Aktivierung des Schalterelements 450 einen Batterieladezustand im Betrieb der Handwerkzeugmaschine 100 zu visualisieren. So kann ein Benutzer der Handwerkzeugmaschine 100 im Betrieb der Handwerkzeugmaschine 100 das Schalterelement 450 betätigen und über die Arbeitsfeldbeleuchtung 160 wird der aktuelle Batterieladezustand visualisiert. Dies kann wie oben beschrieben z. B. durch ein schnelles oder langsames Blinken, Aufleuchten und Dimmen und/oder einem Aufleuchten in einer dem Batterieladezustand zugeordneten Farbe sein.

Alternativ oder optional ist der Steuerelektronik 410 eine Helligkeitssteuerung 460 zum Steuern einer jeweiligen Helligkeit der Arbeitsfeldbeleuchtung 160 zugeordnet. Die Helligkeitssteuerung 460 weist zumindest einen Transistor und/oder ein MOSFET auf. Die Helligkeitssteuerung 460 steuert dabei eine Helligkeit der Arbeitsfeldbeleuchtung 160 in Abhängigkeit von einem zugeordneten Strom. Hierbei kann die Steuerelektronik 410 in Abhängigkeit von einer Umgebungshelligkeit die Helligkeit automatisch steuern und/oder ein Benutzer der Handwerkzeugmaschine 100 kann eine gewünschte Helligkeit über ein zugeordnetes Bedienelement eingeben.

Fig. 5 zeigt ein der Steuerelektronik 410 von Fig. 4 zugeordnetes Blockdiagramm 540 mit der Batterieladezustandserfassungseinheit 440, dem Ladekreis 430, dem Mikrocontroller 420, dem Schalterelement 450 und der Helligkeitssteuerung 460. Bevorzugt weist die Steuerelektronik 410 eine Detektionseinheit 530 zur Detektion einer mit dem Akku 150 elektrisch leitend verbundenen, externen Aufladevorrichtung 155 auf. Die Detektionseinheit 530 ist bevorzugt dazu ausgebildet, in Antwort auf eine Detektion der externen Aufladevorrichtung 155, bzw. auf ein Verbinden der Aufladevorrichtung 155 mit der Handwerkzeugmaschine 100, einen Aufladevorgang des Akkus 150 zu initiieren bzw. zu starten. Insbesondere sendet die Detektionseinheit 530 bei angeschlossener Aufladevorrichtung 155 vorzugsweise ein Ladedetektionssignal 505 an den Mikrocontroller 420.

Des Weiteren weist die Steuerelektronik 410 bevorzugt eine Aufladekontrolleinheit 520 auf, die dazu ausgebildet ist, den Aufladevorgang zu initiieren und nach erfolgter Aufladung zu beenden. Hierfür wird ein Ladekontrollsignal 504 zwischen der Aufladekontrolleinheit 520 und dem Mikrocontroller 420 gesendet.

Ebenfalls wird vorzugsweise ein Batterieladezustandssignal 503 von der Batterieladezustandserfassungseinheit 440 an den Mikrocontroller 420 gesendet. Darüber hinaus sendet das Schalterelement 450 bevorzugt ein Aktivierungssignal 502 an den Mikrocontroller 420.

In Abhängigkeit von den dem Mikrocontroller 420 zugeführten Signalen sendet der Mikrocontroller 420 gemäß einer Ausführungsform ein Pulsweitenmodulations(PWM)-Signal 501 an die Helligkeitssteuerung 460, die wiederum die LEDs 251, 252 der Arbeitsfeldbeleuchtung 160 ansteuert. Ist keine Helligkeitssteuerung 460 vorhanden, sendet der Mikrocontroller 420 das PWM-Signal 501 vorzugsweise direkt an die LEDs 251, 252 der Arbeitsfeldbeleuchtung 160.

Bei einem beispielhaften Verfahren zum Aufladen des Akkus 150 erfolgt in einem ersten Schritt ein elektrisch leitendes Verbinden der externen Aufladevorrichtung 155 mit dem Akku 150 bzw. der Handwerkzeugmaschine 100. Anschließend erfolgt ein Detektieren der elektrisch leitenden Verbindung des Akkus 150 mit der Aufladevorrichtung 155 durch die Detektionseinheit 530. Danach erfolgt ein Aktivieren des Aufladevorgangs durch die Aufladekontrolleinheit 520. Abschließend folgt ein Aktivieren der Arbeitsfeldbeleuchtung 160, wobei ein sich wiederholendes Aufleuchten und Dimmen der Arbeitsfeldbeleuchtung 160 während des Aufladevorgangs ausgeführt wird. Bevorzugt erfolgt vor einer Aktivierung der Aufladekontrolleinheit 520 die Detektion eines zugeordneten Batterieladezustands durch die Batterieladezustandserfassungseinheit 440.

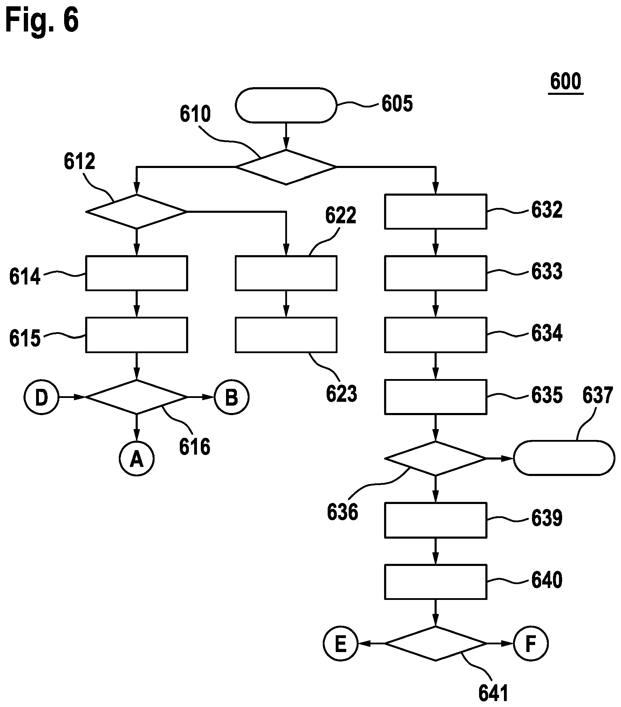

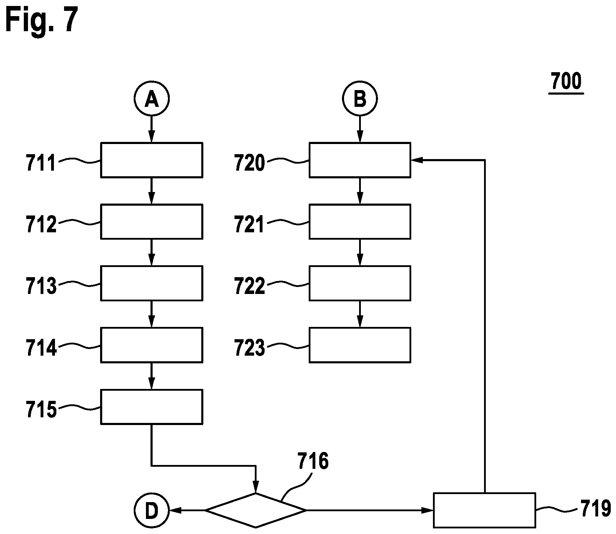

Fig. 6 zeigt ein Flussdiagramm 600, das z. B. von der Steuerelektronik 410 von Fig. 4 und Fig. 5 ausgeführt wird. und bei 605 beginnt. In einem ersten Schritt 610 erfolgt eine Abfrage, ob die Aufladevorrichtung 155 mit der Handwerkzeugmaschine 100 verbunden ist. Besteht eine Verbindung und tritt ein Fehler auf, so erfolgt eine weitere Abfrage 612. Tritt kein Fehler auf, so erfolgt im Schritt 614 ein Detektieren der Detektionseinheit 530, die erkennt, dass die Aufladevorrichtung 155 verbunden ist. Daraufhin sendet der Ladekreis 430 ein Ladedetektionssignal 505 an den Mikrocontroller 420. Anschließend detektiert die Batterieladezustandserfassungseinheit 440 im Schritt 615 einen aktuellen Batterieladezustand und sendet ein Batterieladezustandssignal 503 an den Mikrocontroller 420. Nun erfolgt im Schritt 616 eine Abfrage, ob der Batterieladezustand niedrig ist. Ist der Batterieladezustand nicht niedrig, wird der Aufladevorgang bei B weitergeführt, wie in Fig. 7 beschrieben. Ist der Batterieladezustand niedrig, wird der Aufladevorgang bei A weitergeführt, wie in Fig. 7 beschrieben.

Wird in der Abfrage 612 ein Fehler detektiert, so erfolgt in einem Schritt 622 ein Stoppen des Sendens des PWM-Signals 501 durch eine dem Mikrocontroller 420 zugeordnete Software. Abschließend werden im Schritt 623 die LEDs 251, 252 ausgeschaltet.

Wird im Schritt 610 detektiert, dass die Aufladevorrichtung 155 nicht mit der Handwerkzeugmaschine 100 verbunden ist, so erfolgt im Schritt 632 ein Senden eines Ladekontrollsignals 504 des Mikrocontrollers 420 an die Aufladekontrolleinheit 520, sodass ein Aufladevorgang durch die Aufladekontrolleinheit 520 beendet wird. Anschließend wird im Schritt 633 ein Aufladen des Akkus 150 verhindert und im Schritt 634 stoppt die Software des Mikrocontrollers 420 das Senden des PWM-Signals 501. Daraufhin werden im Schritt 635 die LEDs 251, 252 ausgeschaltet. Danach erfolgt in einem Schritt 636 eine Abfrage, ob das Schalterelement 450 aktiviert ist. Ist das Schalterelement 450 nicht aktiviert, wird der Aufladevorgang in einem Schritt 637 beendet.

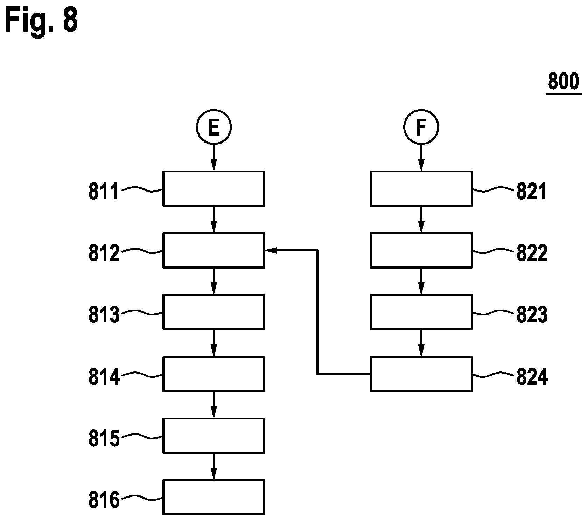

Ist das Schalterelement 450 aktiviert, wird in einem Schritt 639 ein Aktivierungssignal 502 an den Mikrocontroller 420 gesendet. Im Folgenden detektiert die Batterieladezustandserfassungseinheit 440 im Schritt 640 einen aktuellen Batterieladezustand und sendet ein Batterieladezustandssignal 503 an den Mikrocontroller 420. Abschließend erfolgt im Schritt 641 eine Abfrage, ob der Batterieladezustand niedrig ist. Ist der Batterieladezustand niedrig, erfolgt ein Abschalten bei F, wie in Fig. 8 beschrieben. Ist der Batterieladezustand nicht niedrig, fährt der Aufladevorgang bei E fort, wie in Fig. 8 beschrieben.

Fig. 7 zeigt ein Flussdiagramm 700, das z. B. von der Steuerelektronik 410 von Fig. 4 und Fig. 5 ausgeführt wird. Bei A, d.h.in Abhängigkeit von einem Ergebnis der Abfrage 616 von Fig. 6, wird bei einem niedrigen Batterieladezustand in einem Schritt 711 fortgefahren. In diesem Schritt 711 sendet der Mikrocontroller 420 zum Starten der Aufladekontrolleinheit 520 ein Ladekontrollsignal 504 an die Aufladekontrolleinheit 520. Anschließend wird im Schritt 712 das Akku 150 geladen. Die Software des Mikrocontrollers 420 generiert das PWM-Signal 501 im Schritt 713. Dabei ist das PWM-Signal 501 bevorzugt ein langsam alternierendes Signal einer vorgegebenen Frequenz. Im Schritt 714 wird das PWM-Signal 501 an die LEDs 251, 252 gesendet, so dass anschließend im Schritt 715 die LEDs 251, 252 wiederholend aufleuchten und sich dimmen. Abschließend erfolgt in einem Schritt 716 eine Abfrage, ob die externe Aufladevorrichtung 155 getrennt ist. Ist dies nicht der Fall, so geht der Aufladevorgang zurück zu D, wie in Fig. 6 gezeigt ist, und führt erneut die Abfrage 616 von Fig. 6 aus.

Ist die externe Aufladevorrichtung 155 von der Handwerkzeugmaschine 100 getrennt, so erfolgt im Schritt 719 ein Detektieren der Detektionseinheit 530, die erkennt, dass die Aufladevorrichtung 155 nicht verbunden ist. Daraufhin sendet der Ladekreis 430 ein Ladedetektionssignal 505 an den Mikrocontroller 420. Nun erfolgt im Schritt 720, der bei B nach Schritt 616 von Fig. 6 erfolgt, ein Senden eines Ladekontrollsignals 504 des Mikrocontrollers 420 an den Ladekreis 430 und die Funktion der Aufladekontrolleinheit 520 wird beendet. Anschließend wird im Schritt 721 ein Laden des Akkus 150 verhindert bzw. blockiert. Im Schritt 722 stoppt die Software des Mikrocontrollers 420 das Generieren des PWM-Signals 501. Daraufhin werden im Schritt 723 die LEDs 251, 252 ausgeschaltet.

Fig. 8 zeigt ein Flussdiagramm 800, dass z.B. von der Steuerelektronik 410 von Fig. 6 und Fig. 7 ausgeführt wird. Bei E wird ausgehend von Schritt 641 von Fig. 6 mit einem Schritt 811 begonnen, bei dem die Handwerkzeugmaschine 100 gestartet wird. Im folgenden Schritt 812 generiert die Software des Mikrocontrollers 420 ein konstantes PWM-Signal für eine vorgegebene Zeitdauer. Im nächsten Schritt 813 sendet der Mikrocontroller 420 das PWM-Signal an die LEDs 251, 252, sodass die LEDs 251, 252 im Schritt 814 dauerhaft angeschaltet sind. Anschließend stoppt die Software des Mikrocontrollers 420 das Generieren des PWM-Signals und abschließend gehen im Schritt 816 die LEDs 251, 252 aus.

Analog erfolgt bei F nach der Abfrage 641 von Fig. 6, wenn der Batterieladezustand niedrig ist, ebenfalls ein Starten der Handwerkzeugmaschine 100 in einem Schritt 821. Anschließend generiert die Software des Mikrocontrollers 420 im Schritt 822 ein alternierendes PWM-Signal für eine vorgegebene Zeitdauer. Im nächsten Schritt 823 sendet der Mikrocontroller 420 das PWM-Signal an die LEDs 251, 252, sodass die LEDs 251, 252 im Schritt 824 blinken. Anschließend erfolgen die Schritte 812 bis 816 zum Abschalten der LEDs 251, 252.

## Patentansprüche

1. Handwerkzeugmaschine (100), insbesondere Schrauber, mit einer Arbeitsfeldbeleuchtung (160) und einem länglichen Gehäuse (110), in dem eine Antriebseinheit (142) angeordnet ist, die zumindest einen Antriebsmotor (140) zum Antrieb einer Werkzeugaufnahme (120) aufweist, wobei die Werkzeugaufnahme (120) zur Aufnahme eines Einsatzwerkzeugs (190) ausgebildet ist, und mit einem Akku (150) zur netzunabhängigen Stromversorgung, wobei der Akku (150) in einem Aufladevorgang zu einem Aufladen mit einer externen Aufladevorrichtung (155) elektrisch leitend verbindbar ist, **dadurch gekennzeichnet, dass** der Arbeitsfeldbeleuchtung (160) eine Steuerelektronik (410) zugeordnet ist, die dazu ausgebildet ist, im Aufladevorgang ein Aufladen des Akkus (150) durch ein sich wiederholendes Aufleuchten und Dimmen der Arbeitsfeldbeleuchtung (160) zu visualisieren.

2. Handwerkzeugmaschine nach Anspruch 1, **dadurch gekennzeichnet, dass** die Steuerelektronik (410) eine Detektionseinheit (530) zur Detektion einer mit dem Akku (150) elektrisch leitend verbundenen, externen Aufladevorrichtung (155) aufweist und dazu ausgebildet ist, in Antwort auf eine Detektion der externen Aufladevorrichtung (155) einen Aufladevorgang des Akkus (150) zu initiieren.

3. Handwerkzeugmaschine nach Anspruch 2, **dadurch gekennzeichnet, dass** die Steuerelektronik (410) eine Aufladekontrolleinheit (520) aufweist, die dazu ausgebildet ist, den Aufladevorgang zu initiieren und nach erfolgter Aufladung zu beenden.

4. Handwerkzeugmaschine nach einem der vorhergehenden Ansprüche, **dadurch gekennzeichnet, dass** der Steuerelektronik (410) eine Batterieladezustandserfassungseinheit (440) zugeordnet ist, die dazu ausgebildet ist, einen jeweils aktuellen Batterieladezustand zu erfassen.

5. Handwerkzeugmaschine nach einem der vorhergehenden Ansprüche, **dadurch gekennzeichnet, dass** der Steuerelektronik (410) eine Helligkeitssteuerung (460) zum Steuern einer jeweiligen Helligkeit der Arbeitsfeldbeleuchtung (160) zugeordnet ist, wobei die Helligkeitssteuerung (460) zumindest einen Transistor und/oder ein MOSFET aufweist.

6. Handwerkzeugmaschine nach einem der vorhergehenden Ansprüche, **dadurch gekennzeichnet, dass** die Steuerelektronik (410) dazu ausgebildet ist, nach einem vollständigen Aufladen des Akkus (150) die Arbeitsfeldbeleuchtung (160) zu deaktivieren.

7. Handwerkzeugmaschine nach einem der vorhergehenden Ansprüche, **dadurch gekennzeichnet, dass** der Steuerelektronik (410) ein Schalterelement (450) zugeordnet ist, wobei bei einer Aktivierung des Schalterelements (450) ein Batterieladezustand im Betrieb der Handwerkzeugmaschine (100) visualisierbar ist.

8. Handwerkzeugmaschine nach Anspruch 7, **dadurch gekennzeichnet, dass** das Schalterelement (450) nach Art eines von einem Benutzer der Handwerkzeugmaschine (100) aktivierbaren Schalters ausgebildet ist.

9. Handwerkzeugmaschine nach einem der vorhergehenden Ansprüche, **dadurch gekennzeichnet, dass** eine Aktivierungseinheit (189) zum Aktivieren des Antriebsmotors (140) vorgesehen ist, wobei durch ein Beaufschlagen eines in der Werkzeugaufnahme (120) angeordneten Einsatzwerkzeugs (190) gegen ein zu bearbeitendes Werkstück, insbesondere entlang einer Längsachse (128) der Handwerkzeugmaschine (100), eine Aktivierung des Antriebsmotors (140) erfolgt

10. Verfahren zum Aufladen eines Akkus (150) einer Handwerkzeugmaschine (100), insbesondere eines Schraubers, die eine Arbeitsfeldbeleuchtung (160) und ein längliches Gehäuse (110) aufweist, in dem eine Antriebseinheit (142) mit zumindest einem Antriebsmotor (140) zum Antrieb einer Werkzeugaufnahme (120) angeordnet ist, sowie ein Akku (150) zur netzunabhängigen Stromversorgung, wobei das Akku (150) in einem Aufladevorgang zu einem Aufladen mit einer externen Aufladevorrichtung (155) elektrisch leitend verbindbar ist, wobei das Verfahren folgende Schritte aufweist:
• Elektrisch leitendes Verbinden der Aufladevorrichtung (155) mit dem Akku (150),
• Detektieren der elektrisch leitenden Verbindung des Akkus (150) mit der Aufladevorrichtung (155) durch eine Detektionseinheit (530),
• Aktivieren eines Aufladevorgangs durch eine Aufladekontrolleinheit (520), und
• Aktivieren der Arbeitsfeldbeleuchtung (160), wobei ein sich wiederholendes Aufleuchten und Dimmen der Arbeitsfeldbeleuchtung (160) während des Aufladevorgangs erfolgt.

11. Verfahren nach Anspruch 10, **dadurch gekennzeichnet, dass** vor einer Aktivierung der Aufladekontrolleinheit (520) eine Detektion eines Batterieladezustands durch eine Batterieladezustandserfassungseinheit (440) erfolgt.

## Claims

1. Hand-held power tool (100), in particular screwdriver, having a working area lighting means (160) and an elongate housing (110), in which a drive unit (142) which has at least one drive motor (140) for driving a tool fitting (120) is arranged, wherein the tool fitting (120) is designed for receiving an insertion tool (190), and having a rechargeable battery (150) for mains-independent power supply, wherein the rechargeable battery (150) can be electrically conductively connected to an external charging device (155) in a charging process for charging purposes, **characterized in that** that a control electronics system (410) is assigned to the working area lighting means (160) and is designed to visualize charging of the rechargeable battery (150) by repeatedly illuminating and dimming the working area lighting means (160) during the charging process.

2. Hand-held power tool according to Claim 1, **characterized in that** the control electronics system (410) has a detection unit (530) for detecting an external charging device (155), which is electrically conductively connected to the rechargeable battery (150), and is designed to initiate a charging process for the rechargeable battery (150) in response to the external charging device (155) being detected.

3. Hand-held power tool according to Claim 2, **characterized in that** the control electronics system (410) has a charging control unit (520), which is designed to initiate the charging process and to terminate the charging process once charging has taken place.

4. Hand-held power tool according to any of the preceding claims, **characterized in that** a battery state-of-charge detection unit (440) is assigned to the control electronics system (410) and is designed to detect a respectively current battery state of charge.

5. Hand-held power tool according to any of the preceding claims, **characterized in that** a brightness controller (460) for controlling a respective brightness of the working area lighting means (160) is assigned to the control electronics system (410), wherein the brightness controller (460) has at least one transistor and/or a MOSFET.

6. Hand-held power tool according to any of the preceding claims, **characterized in that** the control electronics system (410) is designed to deactivate the working area lighting means (160) once charging of the rechargeable battery (150) is complete.

7. Hand-held power tool according to any of the preceding claims, **characterized in that** a switch element (450) is assigned to the control electronics system (410), wherein a battery state of charge can be visualized during operation of the hand-held power tool (100) when the switch element (450) is activated.

8. Hand-held power tool according to Claim 7, **characterized in that** the switch element (450) is designed in the form of a switch that can be activated by a user of the hand-held power tool (100).

9. Hand-held power tool according to any of the preceding claims, **characterized in that** an activation unit (189) is provided for activating the drive motor (140), wherein the drive motor (140) is activated by way of an insertion tool (190) arranged in the tool fitting (120) being applied to a workpiece to be machined, in particular along a longitudinal axis (128) of the hand-held power tool (100).

10. Method for charging a rechargeable battery (150) of a hand-held power tool (100), in particular a screwdriver, which has a working area lighting means (160) and an elongate housing (110), in which a drive unit (142) having at least one drive motor (140) for driving a tool fitting (120) is arranged, and also a rechargeable battery (150) for mains-independent power supply, wherein the rechargeable battery (150) can be electrically conductively connected to an external charging device (155) in a charging process for charging purposes, wherein the method comprises the following steps:
• electrically conductively connecting the charging device (155) to the rechargeable battery (150),
• a detection unit (530) detecting the electrically conductive connection of the rechargeable battery (150) to the charging device (155),
• a charging control unit (520) activating a charging process, and
• activating the working area lighting means (160), wherein the working area lighting means (160) is repeatedly illuminated and dimmed during the charging process.

11. Method according to Claim 10, **characterized in that** a battery state of charge is detected by a battery state-of-charge detection unit (440) before the charging control unit (520) is activated.

## Revendications

1. Machine-outil portative (100), en particulier une visseuse, comprenant un éclairage de champ de travail (160) et un boîtier allongé (110) dans lequel est agencée une unité d'entraînement (142) qui comporte au moins un moteur d'entraînement (140) pour l'entraînement d'un porte-outil (120), le porte-outil (120) étant conçu pour recevoir un outil d'insertion (190), et comprenant une batterie (150) pour une alimentation électrique autonome, la batterie (150) pouvant être connectée de manière électriquement conductrice à un dispositif de charge externe (155) pour effectuer une charge lors d'un processus de charge, **caractérisée en ce qu'**une électronique de commande (410) est associée à l'éclairage de champ de travail (160), et est conçue pour visualiser une charge de la batterie (150) lors du processus de charge par une illumination et une gradation répétées de l'éclairage de champ de travail (160).

2. Machine-outil portative selon la revendication 1, **caractérisée en ce que** l'électronique de commande (410) comprend une unité de détection (530) pour la détection d'un dispositif de charge externe (155) connecté de manière électriquement conductrice à la batterie (150) et est conçue pour déclencher un processus de charge de la batterie (150) en réponse à une détection du dispositif de charge externe (155).

3. Machine-outil portative selon la revendication 2, **caractérisée en ce que** l'électronique de commande (410) comprend une unité de contrôle de charge (520) qui est conçue pour déclencher le processus de charge et pour le terminer une fois la charge effectuée.

4. Machine-outil portative selon l'une quelconque des revendications précédentes, **caractérisée en ce qu'**une unité de détection d'état de charge de batterie (440) est associée à l'électronique de commande (410), et est conçue pour détecter un état de charge actuel de la batterie.

5. Machine-outil portative selon l'une quelconque des revendications précédentes, **caractérisée en ce qu'**une commande de luminosité (460) est associée à l'électronique de commande (410) pour commander une luminosité respective de l'éclairage de champ de travail (160), la commande de luminosité (460) comprenant au moins un transistor et/ou un MOSFET.

6. Machine-outil portative selon l'une quelconque des revendications précédentes, **caractérisée en ce que** l'électronique de commande (410) est conçue pour désactiver l'éclairage de champ de travail (160) après une charge complète de la batterie (150).

7. Machine-outil portative selon l'une quelconque des revendications précédentes, **caractérisée en ce qu'**un élément de commutation (450) est associé à l'électronique de commande (410), un état de charge de la batterie pouvant être visualisé lors du fonctionnement de la machine-outil portative (100) en cas d'activation de l'élément de commutation (450).

8. Machine-outil portative selon la revendication 7, **caractérisée en ce que** l'élément de commutation (450) est réalisé sous la forme d'un interrupteur activable par un utilisateur de la machine-outil portative (100).

9. Machine-outil portative selon l'une quelconque des revendications précédentes, **caractérisée en ce qu'**il est prévu une unité d'activation (189) pour activer le moteur d'entraînement (140), une activation du moteur d'entraînement (140) s'effectuant par l'application d'un outil d'insertion (190) disposé dans le porte-outil (120) contre une pièce à usiner, en particulier le long d'un axe longitudinal (128) de la machine-outil portative (100).

10. Procédé pour charger une batterie (150) d'une machine-outil portative (100), en particulier une visseuse, qui comprend un éclairage de champ de travail (160) et un boîtier allongé (110) dans lequel sont agencés une unité d'entraînement (142) comprenant au moins un moteur d'entraînement (140) pour l'entraînement d'un porte-outil (120), ainsi qu'une batterie (150) pour une alimentation électrique autonome, la batterie (150) pouvant être connectée de manière électriquement conductrice à un dispositif de charge externe (155) pour effectuer une charge lors d'un processus de charge, le procédé comprenant les étapes suivantes :
• connexion électriquement conductrice du dispositif de charge (155) à la batterie (150),
• détection par une unité de détection (530) de la connexion électriquement conductrice de la batterie (150) au dispositif de charge (155),
• déclenchement par une unité de contrôle de charge (520) d'un processus de charge, et
• activation de l'éclairage de champ de travail (160), une illumination et une gradation répétées de l'éclairage de champ de travail (160) étant effectuées pendant le processus de charge.

11. Procédé selon la revendication 10, **caractérisé en ce qu'**avant une activation de l'unité de contrôle de charge (520), une détection d'un état de charge de la batterie est effectuée par une unité de détection d'état de charge de batterie (440).
